# EUROPÄISCHE PATENTSCHRIFT

(11) **EP 1 036 487 B1**
(45) Veröffentlichungstag und Bekanntmachung des Hinweises auf die Patenterteilung: **31.10.2001**
(21) Anmeldenummer: 99911797.1
(22) Anmeldetag: 16.03.1999
(51) Int. Cl.: H05B 6/40, H05B 6/10

(54) **HEIZEINRICHTUNG UND VERFAHREN FÜR EINE INDUKTIVE WÄRMEBEHANDLUNG**
HEATING DEVICE AND METHOD FOR INDUCTIVE HEAT TREATMENT
DISPOSITIF ET PROCEDE DE CHAUFFAGE POUR TRAITEMENT THERMIQUE PAR INDUCTION

(30) Priorität: 16.03.1998 DE 29804574 U
(43) Veröffentlichungstag der Anmeldung: 20.09.2000
(60) Teilanmeldung: 00117787.2
(73) Patentinhaber: KUKA Schweissanlagen & Roboter GmbH, D-86165 Augsburg (DE)
(72) Erfinder: BENDA, Pablo, D-86156 Augsburg (DE); MAZAC, Karel, D-86316 Friedberg (DE); GRÖGER, Walter, D-86494 Emersacker (DE); THRUL, Werner, D-86450 Zusamzell (DE)
(74) Vertreter: Ernicke, Hans-Dieter, Dipl.-Ing.
(86) Internationale Anmeldenummer: EP9901718
(87) Internationale Veröffentlichungsnummer: WO9948334

(56) Entgegenhaltungen:
- EP-A- 0 804 050
- DE-A- 4 428 565
- US-A- 4 602 139
- US-A- 4 668 850
- US-A- 4 950 348

## Beschreibung

Die Erfindung betrifft ein Verfahren und eine Heizeinrichtung für eine induktive Wärmebehandlung mit den' Merkmalen im Oberbegriff des Verfahrens- und Sachhauptanspruchs.

Eine derartige induktive Heizeinrichtung ist aus der DE-A-44 28 565 bekannt. Sie besteht aus einem der Werkstückkontur exakt nachgeformten Forminduktor mit einer Stromversorgung. Der Induktor kann einteilig oder mehrteilig sein. Er hat überall den gleichen Abstand und die gleiche Position gegenüber der benachbarten Werkstückkante. Die bekannte Heizeinrichtung ist auf einen überall gleichmäßigen Wärmeeintrag am Werkstück ausgelegt.

Die US-A-4,950,348 zeigt eine andere induktive Heizeinrichtung, die einen Induktor aus mehreren untereinander verbindbaren und elektrisch in Reihe geschalteten Induktorteilen aufweist. Die Induktorteile bilden zugleich die Auflage und die Stützen für das Werkstück und haben einen gleichbleibenden Abstand zum Werkstück. Auch hier ist ein überall gleichmäßiger Wärmeeintrag am Werkstück beabsichtigt.

Ähnlich ist auch die Induktionseinrichtung nach der EP-A-0 804 050 ausgebildet. Hier sind mehrere Induktionsköpfe vorhanden, die örtlich in Reihe hintereinander angeordnet und elektrisch parallel geschaltet sind. Die Induktionsköpfe sind jeweils mit einer eigenen Stronquelle verbunden. Auch hier ist ein überall gleichbleibender Wärmeeintrag am Werkstück vorgesehen.

Aus der US-A-4,602,139 ist eine Induktionsheizung mit zwei einteiligen Induktoren bekannt, die in eine das Werkstück fixierende Spanneinheit eingesetzt sind. Die Induktoren haben überall den gleichen Abstand zum Werkstück und. sollen das Werkstück an allen Bereichen mit dem gleichen Wärmeeintrag beaufschlagen. Etwaige Fehlstellungen der Induktoren und Abweichungen vom gleichmäßigen Wärmeeintrag werden durch eine Abschirmung mit Schilden aus Ferrit oder laminierten Stahlplatten kompensiert.

Andere induktive Heizeinrichtungen sind aus der DE C1 37 11 645 und der DE-A-195 27 827 bekannt. Sie bestehen aus einer elektrischen Stromversorgung nebst Transformator und Induktor. Der Induktor ist als einteilige Spule ausgebildet, der z.B. in Form einer Ringspule mehrfach um ein innenliegendes Werkstück gewickelt ist. Durch die mittel- oder hochfrequenten Heizwechselströme wird dieses Werkstück erwärmt. Die bekannten Heizeinrichtungen und deren Induktoren sind für kleinere Werkstücke besonders geeignet, die sich in der Spule plazieren lassen. Für größere Werkstücke, wie z.B. Türen von Kraftfahrzeugen oder dergleichen treten mit den bekannten Induktoren Probleme mit gleichmäßiger Wärmeverteilung, Bauteilverzug etc. auf.

Es ist daher Aufgabe der vorliegenden Erfindung, ein Verfahren und eine Heizeinrichtung für eine induktive Wärmebehandlung mit einem Induktor aufzuzeigen, die größere Einsatzbereiche ermöglichen.

Die Erfindung löst diese Aufgabe mit den Merkmalen im Hauptanspruch.
Der Induktor der Heizeinrichtung ist mehrteilig ausgebildet und besteht aus mehreren untereinander verbindbaren Induktorteilen. Die Induktorteile können dabei in enger Nachbarschaft zueinander angeordnet sein oder auch weiter entfernt positioniert sein. Diese Ausbildung hat den Vorteil, daß der Induktor sich optimal an die Werkstückkonturen und an den örtlich gewünschten Einsatzbereich für die Wärmebehandlung anpassen läßt. Dies ist insbesondere für komplexe Werkstücke, wie z.B. Türen von Fahrzeugrohkarossen, von Vorteil.

Die übertragene Wärme hängt vom Abstand und von der Lage des Induktors gegenüber der jeweils benachbarten Werkstückpartie ab. Durch die entsprechend gestaltete Mehrteiligkeit des Induktors können hier selektive Anpassungen erfolgen. Der Wärmeeintrag und die Aufheizung des Werkstücks können nach Wunsch beeinflußt werden. Dabei lassen sich gewisse Werkstückbereiche gezielt stärker erhitzen als andere. Außerdem lassen sich durch die Induktoranpassung Problemzonen mit großer Massenanhäufung und Wärmeableitung am Werkstück beherrschen. Der mehrteilige Induktor erlaubt außerdem Korrekturen von Werkstückverzügen.

Die Induktorteile sind in Reihe hintereinander angeordnet und bilden miteinander ein oder mehrere Schleifen einer Spule.

Die erfindungsgemäße Heizeinrichtung kann für unterschiedliche Wärmebehandlungsprozesse in Verbindung mit einem vorzugsweise mittelfrequenten Heizstrom von 4 kHz bis 15 kHz eingesetzt werden. Bevorzugt ist ein Einsatz als Gelierstation oder als Glühstation für Blechbauteile von Fahrzeugkarosserien. Bei beiden Verfahren ist der Wärmeeintrag begrenzt und liegt wesentlich unter der z.B. für Schweißprozesse erforderlichen Wärmemenge. Dementsprechend wird auch die Frequenz des Heizstromes gewählt.

Der besondere Vorteil der induktiven Wärmebehandlung liegt in der örtlich begrenzten und in der gezielten Erwärmung der Werkstücke. Insbesondere soll beim Gelieren und beim Glühen nur der Umformbereich erwärmt werden. Hierfür ist die Mehrteiligkeit des Induktors und die Verstellbarkeit der einzelnen Induktorteile von besonderem Vorteil. Durch die örtliche Begrenzung des Wärmeeintrages können unerwünschte Nebenwirkungen der Wärmebehandlung, wie ein Bauteilverzug, eine thermische Überbelastung von Klebstoffen, Dichtmitteln, etc. vermieden werden.

Bei der erfindungsgemäßen Heizeinrichtung können ein oder mehrere Temperaturfühler vorhanden sein, die einerseits für die optimale Einrichtung und Positionierung der Induktorteile und zum anderen auch für den Wärmebehandlungsprozeß von Vorteil sind. Diese Wärmefühler können insbesondere zur Steuerung und Regelung des Wärmebehandlungsprozesses eingesetzt werden.

Die Heizeinrichtung hat verschiedene weitere Vorteile. Zum einen ermöglicht sie ein schnelles Aufheizen von Blechteilen zum gleichmäßigen Polymerisieren von Klebe- oder Dichtmitteln in Bördelnähten oder Sealernähten. Dabei ergibt sich ein geringer Energieverbrauch. Mittels Temperaturregelung kann die Haltetemperatur für die Polymerisation konstant gehalten werden. Durch die Frequenz- und Pulsweitenmodulation ist eine optimale Anpassung an die Gelieraufgaben möglich. Dabei lassen sich Prozeßparameter und Prozeßprogramme über ein Display an der Steuerung individuell einstellen. Bei unterschiedlichen Lastkreisen ist keine Anpassung erforderlich. Insgesamt ergeben sich optimale Prozeßbedingungen bei niedrigen Investitionskosten.

Bei der Glühstation ermöglicht die Heizeinrichtung ein gesteuertes Erwärmen und geregeltes Halten der Temperatur. Auch hier ist über Frequenz- und Pulsweitenmodulation eine optimale Anpassung an die Glühaufgabe zu erreichen. Während eines Zyklusses sind zudem verschiedene Frequenzen wählbar, was auch bei anderen Wärmebehandlungsprozessen, z.B. dem Gelieren, möglich ist. Durch das induktive Glühverfahren lassen sich gezielte Gefügeumwandlungen an geschweißten Bauteilen erzielen. Insbesondere können Gußwerkstoffe innerhalb kürzester Zeit im Gefüge umgewandelt werden.

In den Unteransprüchen sind weitere vorteilhafte Ausgestaltungen der Erfindung angegeben.

Die Erfindung ist in den Zeichnungen beispielsweise und schematisch dargestellt. Sie zeigen im einzelnen:
- Figur 1:: eine induktive Heizeinrichtung in Form einer Gelieranlage mit einem mehrteiligen Induktor und einem Werkstück in einer Draufsicht,
- Figur 2:: eine detaillierte und abgebrochene Seitenansicht des Induktors am Werkstück,
- Figur 3:: eine Variante des Induktors mit zwei Schleifen,
- Figur 4:: eine Heizeinrichtung in Form einer Glühstation für Bördeleinrichtungen in einer perspektivischen Darstellung,
- Figur 5:: ein Werkstück mit Umformbereichen in Seitenansicht und Draufsicht,
- Figur 6:: einen Querschnitt durch die Heizeinrichtung von Figur 4 mit einer Bauteilaufnahme und einem Werkstück,
- Figur 7:: eine weitere Variante einer direkten Bauteilbeheizung durch parallele und zustellbare Induktoren und
- Figur 8:: eine Bauvariante zu Figur 1 mit kurzen und weit beabstandeten Induktorteilen.

Bei den in den Zeichnungen gezeigten Werkstücken (2) handelt es sich um Blechbauteile von Fahrzeugkarosserien, z.B. um die Fahrzeugtür einer Rohkarosse. Alternativ können es aber auch beliebige andere Werkstücke sein. Die Werkstücke (2) können ein- oder mehrteilig sein und eine beliebige Kontur besitzen. In der gezeigten Ausführung hat z.B. die Türe (2) eine Fensteröffnung (15). Darüber hinaus können auch weitere Öffnungen (15) vorhanden sein. Das Werkstück (2) bzw. dessen Einzelteile bestehen aus metallischen Werkstoffen, insbesondere Eisen- oder Stahlwerkstoffen oder Aluminiumlegierungen oder anderen Leichtmetallegierungen. Dabei können die Einzelteile auchaus unterschiedlichen metallischen Werkstoffen oder Verbundwerkstoffen bestehen.

Das Werkstück (2) ruht in oder auf einer Bauteilaufnahme (22), die auf einer vorzugsweise nicht ferromagnetischen Grundplatte oder einem Gestell (26) angeordnet ist. Diese Teile (22,26) sind in Figur-1 schematisch angedeutet. Die Bauteilaufnahme (22) hat geeignete Führungen and Halterungen sowie gegebenenfalls Spannelemente (nicht dargestellt) zur Fixierung des Werkstücks (2) in der gewünschten Position.

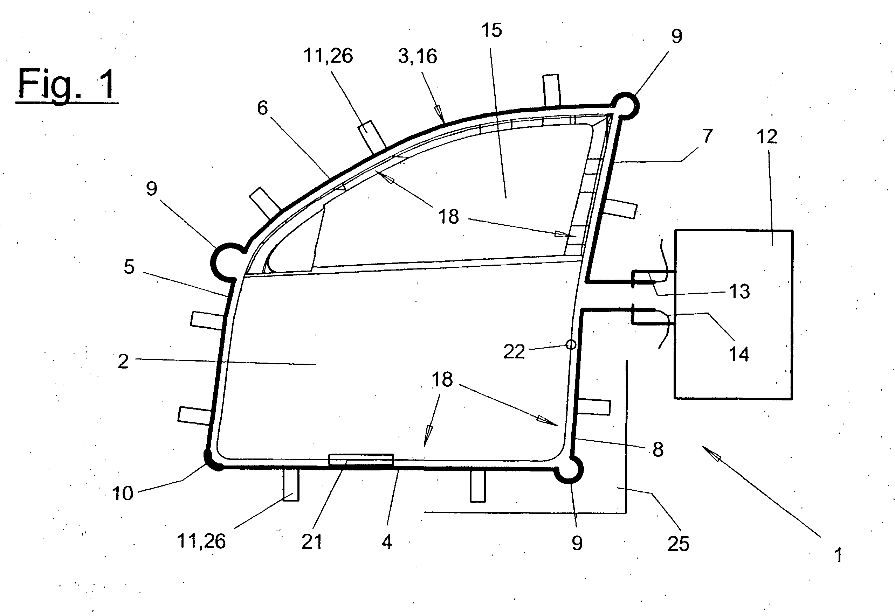

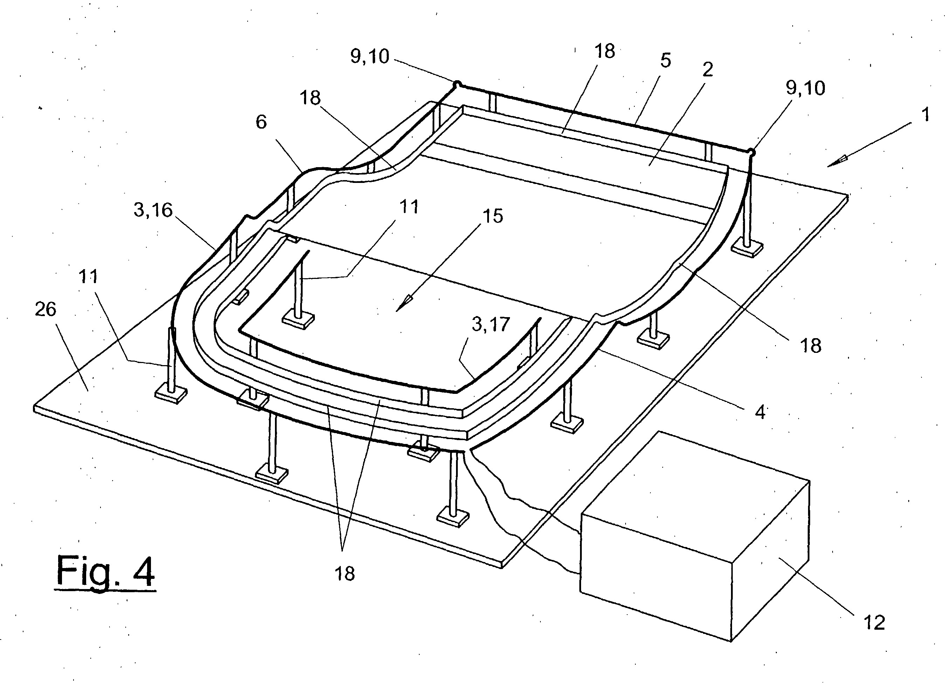

Das Werkstück (2) hat ein oder mehrere vorzugsweise randseitig angeordnete Umformbereiche (18). Diese können je nach Fertigungsstadium unterschiedlich ausgebildet sein.
Bei der in Figur 1 bis 3 gezeigten Fahrzeugtüre (2) sind beispielsweise einige der außenliegenden Blechkanten schon fertig gebördelt. Hier sind die Umformbereiche (18) als Bördelfalze ausgebildet.
Im Ausführungsbeispiel von Figur 4 bis 7 ist die Fahrzeugtüre (2) in einem Vorstadium vor dem Bördeln dargestellt. Die Blechteile der Fahrzeugtüre (2) kommen hier aus einem ersten Umformprozeß, z.B. einem Preß-, Biege- oder Tiefziehprozeß und haben vorgebogene Bördelflansche, die in einem nachfolgenden Bördelprozeß vor- und fertiggefalzt werden sollen.

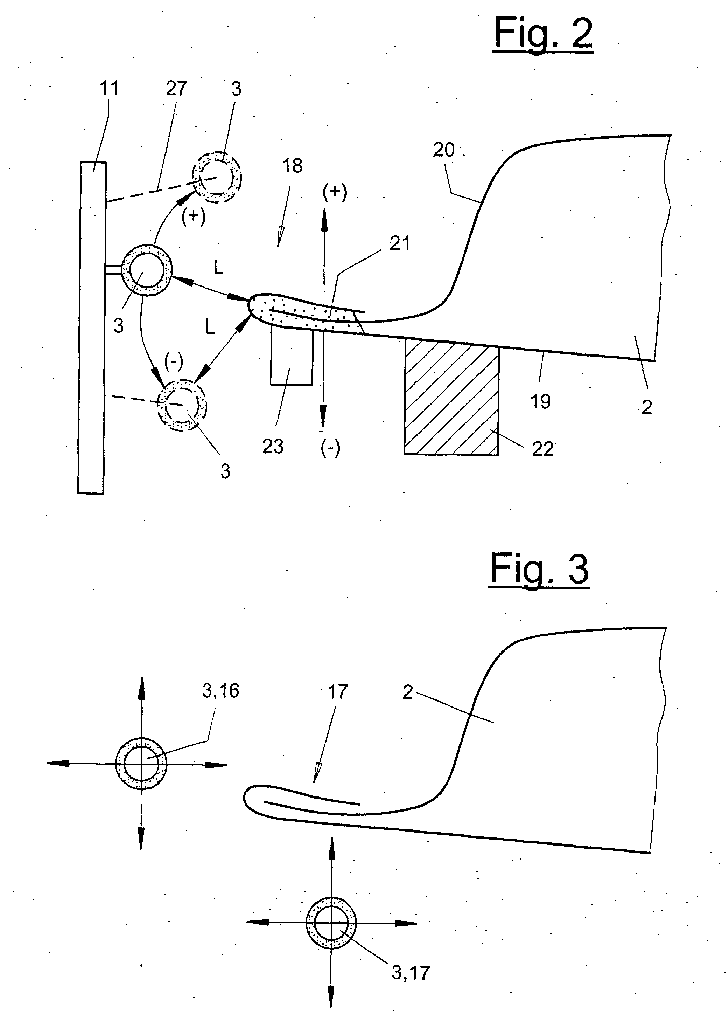

Wie Figur 2 und 3 verdeutlichen, wird an den Bördelfalzen (18) zwischen dem Außenblech oder Unterblech (19) und dem eingeschobenen Blech oder Innenblech (20) ein Klebstoff (21) eingebracht. Der ümgebogene Bördelfalz (18) kann andererseits gegenüber dem eingeschobenen Blech (20) auch noch mit einem Sealer (nicht dargestellt) abgedeckt werden. Dies kann z.B. eine längs der Kante aufgetragene Dichtungsmittelraupe sein. Der Klebstoff (21) und der Sealer benötigen eine möglichst gesteuerte und gegebenenfalls auch geregelte Wärmezufuhr, um auszuhärten und abzubinden bzw. zu polymerisieren. Diese Erwärmung sollte möglichst gleichmäßig erfolgen, wobei gewisse Problemzonen mit erhöhter Massenansammlung bzw. Wärmeableitung an der Fahrzeugtüre (2) bestehen. Dies sind z.B. die Bereiche an den Türgelenken und auch andere Stellen.

Zur Erwärmung der Fahrzeugtüre (2) und insbesondere zur Aufheizung der partiell angeordneten oder umlaufenden Umformbereiche (18) ist eine induktive Heizeinrichtung (1) vorhanden, die für den in Figur 1 bis 3 gezeigten Einsatzbereich als Gelieranlage ausgebildet ist. In Figur 4 bis 7 ist die Heizeinrichtung (1) als Glühstation zum Rekristallisations- oder Löseglühen oder für andere Glühprozesse zur Gefügebeeinflussung der Werkstoffe ausgebildet.

Die Heizeinrichtung (1) ist in einer Fertigungslinie angeordnet und befindet sich z.B. hinter einer ersten Umformstation, die ein Preß- oder Biegewerkzeug hat. Hierbei werden das Werkstück (2) oder dessen Einzelteile einem ersten mechanischen Umformprozeß beliebiger Art unterworfen. Dies kann z.B. ein Preß-, Tiefzieh- oder Biegeprozeß sein. Insbesondere können dabei auch mehrere Einzelteile getrennt bearbeitet und anschließend zu der gezeigten Fahrzeugtüre (2) zusammengesetzt werden. Statt einem Umformprozeß können auch mehrere Umformprozesse vorhergehen.

Hinter der Heizeinrichtung (1) werden in ein oder mehreren Folgestationen der Fertigungslinie ein oder mehrere weitere Behandlungsschritte, z.B. weitere Umformprozesse durchgeführt. Hierbei kann insbesondere der Heizeinrichtung (1) im Ausführungsbeispiel von Figur 4 bis 7 mindestens eine Bördeleinrichtung nachgeschaltet sein. Der Übersicht halber sind in den Zeichnungen die Fertigungslinie und die der Heizeinrichtung (1) vor- und nachgeschalteten Stationen nicht dargestellt. In einer Abwandlung kann die Heizeinrichtung (1) auch in eine Umformstation integriert sein.

Die Heizeinrichtung (1) besteht aus mindestens einer Stromversorgung nebst Steuerung (12), die gegebenenfalls auch eine Kühlmittelversorgung beinhaltet und aus einem oder mehreren Induktoren (3). Der Induktor (3) kann ein oder mehrere Induktorschleifen (16,17) haben, die an einer gemeinsamen Stromversorgung (12) angeschlossen sind. Alternativ können die Induktoren (3) oder Induktorschleifen (16,17) auch getrennte Stromversorgungen (12) haben.

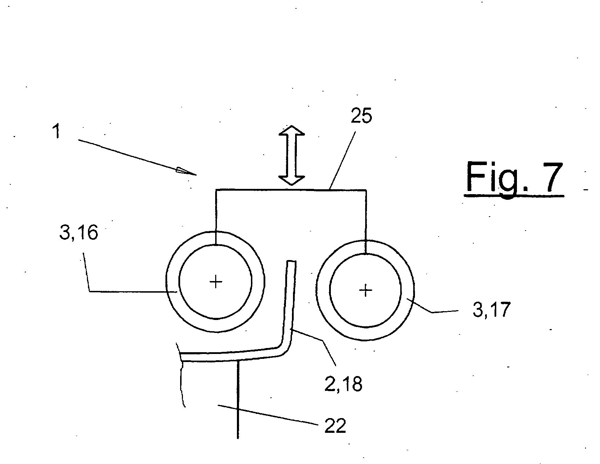

Der Induktor (3) ist mehrteilig ausgebildet und besteht aus mehreren in Reihe hintereinander angeordneten Induktorteilen (4,5,6,7,8), die durch Verbindungselemente (9,10) miteinander gekoppelt sind. Zusätzlich kann zumindest stellenweise auch eine Parallelanordnung wie in Figur 3 und 7 vorhanden sein. Die Induktorteile (4,5,6,7,8) bilden mindestens eine der zu erwärmenden Werkstückkontur nachgebildete Induktorschleife (16,17) und sind über einen Elektroanschluß (13) mit der Stromversorgung (12) verbunden. An den Schleifenenden des Induktors (3) kann außerdem ein Fluidanschluß (14) vorhanden sein, mit dem z.B. ein Kühlmittel durch den Induktor (3) bzw. dessen Induktorteile (4,5,6,7,8) geleitet wird. Die nachfolgenden Erläuterungen zu den Induktoren (3) gelten sinngemäß auch für deren Induktorteile (4,5,6,7,8).

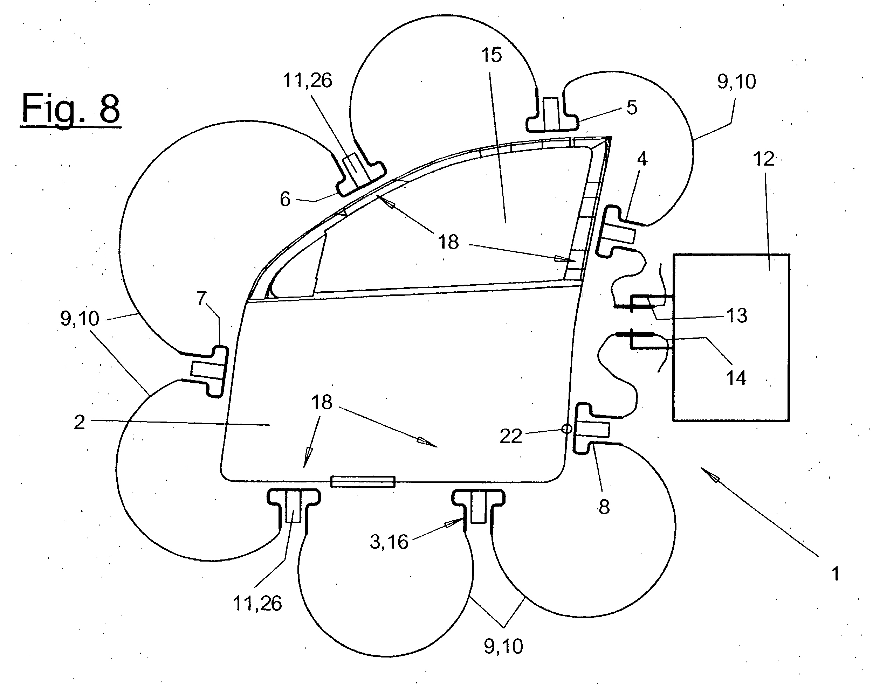

In Figur 1 bis 7 umschließt der Induktor (3) die Fahrzeugtüre außenseitig fast vollständig. Die Induktorteile (4,5,6,7,8) haben eine relativ große Länge und sind mit ihren Enden in enger Nachbarschaft zueinander angeordnet. Entsprechend kurz sind die Verbindungselemente (9,10). Figur 8 zeigt hierzu eine Abwandlung mit mehreren kurzen Induktorteilen (4,5,6,7,8), die mit größeren gegenseitigen Abständen rund um die Fahrzeugtüre (2) verteilt angeordnet sind. Die Verbindungselemente (9,10) sind entsprechend länger. Diese Induktorteile (4,5,6,7,8) wirken nur örtlich begrenzt auf das Werkstück (2) ein, wobei die Verbindungselemente (9,10) in großen Bögen weiter vom Werkstück (2) distanziert sind und im wesentlichen keinen induktiven Einfluß auf das Werkstück (2) haben.

Der Induktor (3) bzw. dessen Teile (4,5,6,7,8) sind vorzugsweise als stromleitende Rohre, z.B. als Kupferrohre, ausgebildet. Die Rohre haben vorzugsweise eine gewisse plastische Verformbarkeit und lassen sich durch Biegen der gewünschten Werkstückkontur nachformen. Figur 1 zeigt diese Gestaltung z.B. im oberen Fensterbereich. Der Induktor (3) folgt der Außenkontur der Türe (2) und ist in der Nähe von den zu beheizenden Umformbereichen (18) angeordnet.

Die Induktorteile (4,5,6,7,8) lassen sich einzeln gegenüber dem Werkstück (2) positionieren. Sie können in ihrer Lage und in ihrem Abstand zum Werkstück (2) verändert werden. Zu diesem Zweck besitzt vorzugsweise jedes Induktorteil (4,5,6,7,8) eine eigene, vorzugsweise verstellbare Haltevorrichtung (11), die in beliebig geeigneter Weise ausgebildet ist und das Induktorteil (4,5,6,7,8) in der gewünschten Lage gegenüber dem Werkstück (2) positioniert und festhält. Die Haltevorrichtungen (11) haben z.B. einen auf der Grundplatte (26) befestigten Ständer mit einer ein- oder mehrgliedrigen Verstelleinrichtungen (27) und Spannmitteln, die das Induktorteil (4,5,6,7,8) halten und positionieren.

Vorzugsweise besteht eine Verstellmöglichkeit in zwei oder mehr Achsen, z.B. in zwei translatorischen und/oder rotatorischen Achsen. Außerdem kann eine Längenverstellung vorhanden sein. Die Induktorteile (4,5,6,7,8) können dadurch sowohl in ihrem seitlichen Abstand, wie auch in ihrer Höhe gegenüber dem Werkstück (2) positioniert werden. Figur 2 zeigt hierfür ein Ausführungsbeispiel.

Durch die Verstellmöglichkeit kann der Wärmeeinfluß am Werkstück (2) verändert werden. Über eine Abstandsänderung kann der Wärmeeintrag verstärkt oder geschwächt werden. Hierbei ist es beispielsweise möglich, ein Induktorteil (4,5,6,7,8) mittels der Haltevorrichtung (11) so zu positionieren oder auch zu verformen, daß örtlich sein Abstand zum Werkstück (2) besonders gering wird. An dieser Stelle ist der Wärmeeintrag besonders groß. Eine solche Gestaltung ist z.B. im Bereich der Türangeln sinnvoll, wo über die Massenanhäufung am Werkstück (2) eine hohe Wärmeableitung gegeben ist. Eine Parallelanordnung von Induktorteilen (4,5,6,7,8) oder die Anordnung von zwei oder mehr Induktorschleifen (16,17) gemäß Figur 3 kann ebenfalls der Veränderung des Wärmeeintrags dienen. Die Induktorschleifen (16,17) sind unabhängig voneinander positionierbar. Sie verlaufen vorzugsweise zumindest teilweise parallel zueinander.

Alternativ können die Induktorteile (4,5,6,7,8) auch in beliebig anderer Weise ausgebildet sein, z.B. in Form von speziellen konturenangepaßten und z.B. gefrästen Profilen.

Sie müssen auch nicht hohl sein.

Der Induktor (3) besteht aus zwei oder mehr Induktorteilen, vorzugsweise mindestens vier Induktorteilen (4,5,6,7,8). Die Induktorteile (4,5,6,7,8) sind elektrisch in Reihe geschaltet. Sie können teilweise auch parallel geschaltet sein. Dabei können gegebenenfalls auch mehrere ein- oder mehrteilige Induktoren (3) an dem Werkstück (2) angeordnet sein und mit einer gemeinsamen Stromversorgung (12) oder jeweils mit einer eigenen Stromversorgung verbunden sein. Beispielsweise kann ein eigener ein- oder mehrteiliger Induktor (3) in der Fensteröffnung (15) angeordnet sein, um die innenliegenden Bördelkanten zu erwärmen.

Die Verbindungselemente (9,10) zwischen den Induktorteilen - (4,5,6,7,8) können in beliebig geeigneter Weise ausgebildet sein. Hierbei empfiehlt es sich, z.B. zunächst flexible Verbindungselemente (9) zu verwenden, die z.B. als elektrisch leitende Schläuche ausgebildet sind. Diese Verbindungselemente (9) können dann Verstellungen der Induktorteile (4,5,6,7,8) und der Haltevorrichtungen (11) folgen und so eine komplette Konturenanpassung des Induktors (3) ermöglichen. Sobald die gewünschte Position der Induktorteile (4,5,6,7,8) gefunden ist, können die flexiblen Verbindungselemente (9) gegen starre Verbindungselemente (10), z.B. starre rohrförmige Eckverbinder, ausgetauscht werden. Es ist aber auch möglich, die flexiblen Verbindungselemente (9) zu belassen oder in Kombination mit starren Verbindungselementen (10) einzusetzen.

Die Heizeinrichtung (1) kann auch ein oder mehrere Sensoren, z.B. Temperaturfühler (23) aufweisen, mit denen die Heizeinrichtung (1) gesteuert wird. Für den Einrichtvorgang können derartige Sensoren bereits eingesetzt werden. Es ist aber auch möglich, für den Einrichtvorgang eine sogenannte Wärmemeß- oder Thermokamera einzusetzen, um in Verbindung mit der Induktoranpassung den optimalen Wärmeeintrag zu finden.

Wie Figur 2 verdeutlicht, kann der Temperaturfühler (23) an geeigneter Stelle im Umformbereich (18) am Werkstück (2) angeordnet sein. Diese Temperaturfühler (23) können nicht nur zur Einrichtung der Station, sondern auch während der normalen Wärmeprozesse zur Steuerung und Regelung beziehungsweise Überwachung des Wärmeeintrags eingesetzt werden.

Die Stromversorgung (12) kann in beliebig geeigneter Weise ausgebildet sein. Vorzugsweise ist sie gemäß der DE-A 195 27 827 gestaltet und besitzt primärseitig einen Netzgleichrichter mit einem nachgeschalteten Gleichstromkreis oder Zwischenkreis mit einer Kondensatoranordnung, die die sekundärseitig entstehende Blindleistung primärseitig kompensiert. Dieser Zwischenkreis ist vor einen beliebig steuerbaren Wechselrichter geschaltet, der seinerseits ausgangsseitig an einen geeigneten Transformator angeschlossen ist. Am Transformator ist wiederum sekundärseitig der Induktor (3) angeschlossen. Der sekundärseitige Heizkreis ist vorzugsweise ohne Kondensator ausgestattet und schwingkreisfrei. Die Steuerung der Heizleistung und/oder der Heiztemperatur am Werkstück (2) wird durch Frequenzmodulation und/oder Pulsweitenmodulation am Wechselrichter gesteuert und gegebenenfalls bei einer entsprechenden Temperatur- oder Wärmemessung auch geregelt. Der Wechselrichter erzeugt einen mittel- oder hochfrequenten Wechselstrom von z.B. 4 bis 15 kHz, der nach der Transformierung als Heizstrom dem Induktor (3) zugeführt wird.

Je kleiner die Frequenz des Heizstroms ist, desto schneller steigt bei der gewählten Anordnung wegen steigender Leistung die Temperatur im Werkstück (2). Desgleichen steigt die Temperatur mit der Größe der gewählten Pulsweite. Bei den Wärmebehandlungen, insbesondere beim Gelieren und beim Glühen kann mit unterschiedlichen Heizstrom-Frequenzen gearbeitet werden. Insbesondere kann der Prozeß über ein Stromprogramm gesteuert und über die Temperaturmessung am Werkstück (2) oder einen anderen Feedback auch geregelt werden.

Bei der gezeigten Ausführungsform können mit dem mehrteiligen Induktor (3) auch Werkstückkorrekturen vorgenommen werden. Bei einer Wärmebehandlung besteht meistens das Problem, daß sich das Werkstück (2) beim Abkühlen verzieht. Verzug kann auch beim Aufwärmen entstehen. Diesem unerwünschten Verzug kann durch, einen gezielten Wärmeeintrag begegnet werden. Zu diesem Zweck wird z.B. zunächst bei der Einrichtung der mehrteilige Induktor (3) derart an das Werkstück (2) angepaßt, daß in erster Näherung einmal ein gleichmäßiger Wärmeeintrag an den gewünschten Stellen des Werkstückes (2) erfolgt. Sollte sich hinterher zeigen, daß bei dieser Wärmebehandlung beim Aufwärmen bzw. Abkühlen ein Verzug eintritt, können die jeweils für eine Kompensation geeigneten Induktorteile (4,5,6,7,8) verstellt werden, um durch eine damit einhergehende Änderung des Wärmeeintrags gezielt den Verzug zu kompensieren.

Figur 2 verdeutlicht diese Verzugskompensation. Bei der Verstellung des Induktors (3) sollte der Abstand "L" zum Umformbereich (18) möglichst konstant bleiben. Wird der Induktor aus der mit durchgezogenen Strichen gezeichneten Normalposition in "Plus-"Richtung nach oben über den Umformbereich (18) verstellt, hat dies eine stärkere Erhitzung des Innenblechs (20) zur Folge. Der Umformbereich (18) reagiert entsprechend und verformt sich in "Minus-"Richtung nach unten. Umgekehrt hat eine Verstellung des Induktors (3) in "Minus-"Richtung nach unten eine stärkere Erhitzung des Aüßenblechs (19) zur Folge. Der Umformbereich (18) reagiert entsprechend in "Plus-"Richtung. In den beiden Verstellpositionen ist der Induktor (3) gestrichelt dargestellt.

Figur 8 zeigt eine Heizeinrichtung (1) in Form einer Vorstation für die Gelierarilage von Figur 1. Diese Vorstation eignet sich besonders für die gezielte Beseitigung von Verzügen am Werkstück (2), die durch vorhergehende Behandlungen und Prozesse entstanden sind. Bei der Ausführungsform von Figur 8 sind mehrere kleine und kurze Induktorteile (4,5,6,7,8) an geeigneten Stellen des Werkstücks (2) angeordnet und wirken lokal auf bestimmte Stellen am Werkstück (2) ein. Dementsprechend klein sind die Wärmeeinflußzonen am Werkstück (2), so daß ein sehr gezielter und hochwirksamer Wärmeeintrag erfolgen kann. Die Induktorteile (4,5,6,7,8) können auch hier wie in den vorhergehenden Ausführungsbeispielen parallel oder in Reihe angeordnet sein. Sie sind untereinander auch elektrisch in Reihe geschaltet, wobei teilweise auch elektrische Parallelschaltungen bestehen können. Die weit ausbauchenden Verbindungselemente (9,10) haben durch ihren großen Abstand keinen oder nur einen sehr geringen induktiven Einfluß auf das Werkstück (2). Bei dieser Ausführung haben die Induktorteile (4,5,6,7,8) eine sehr kleine Länge und sind kürzer als die Verbindungselemente (9,10).

In einer nicht dargestellten Abwandlung sind Mischformen der Ausführungsbeispiele von Figur 1 und 8 möglich. So können Induktorteile mit größerer Länge und kurzen gegenseitigen Abständen mit anderen Induktorteilen kombiniert werden, die eine kleinere Länge und größere gegenseitige Abstände aufweisen. Desgleichen können auch mehrere längere Induktorteile mit größerem Abstand zueinander angeordnet sein. Die Größe und Anordnung der Induktorteile (4,5,6,7,8) richtet sich nach den Gegebenheiten des Werkstücks (2) und den Prozeßerfordernissen bzw. der Lage und Größe der gewünschten Wärmeeinflußzone am Werkstück (2).

Sobald beim Einrichtvorgang die optimale Stellung der Induktorteile (4,5,6,7,8) gefunden ist, werden diese mit ihren Haltevorrichtungen (11) fixiert und gegebenenfalls auch die Verbindungselemente (9,10) entsprechend festgelegt. Für den Dauerbetrieb bleibt dann der Induktor (3) unverändert und nur das Werkstück (2) wird für die jeweilige Wärmebehandlung zugeführt und wieder ausgetauscht.

Im Ausführungsbeispiel von Figur 4 bis 7 wird mit der Heizeinrichtung (1) ein Glühprozeß durchgeführt. Bei Werkstücken aus Aluminium oder anderen Leichtmetallegierungen kann es sich um ein Lösungsglühen handeln. Bei Werkstücken (2) aus Stahl oder anderen Eisenwerkstoffen kann es sich um ein Spannungsfrei- bzw. Rekristallisationsglühen handeln. Alternativ sind auch andere Arten der Wärmebehandlung möglich.

In der Anordnung von Figur 4 bis 7 wird das Werkstück (2) an den zu erwärmenden Umformbereichen (18), d.h. hier den vorgebogenen Bördelflanschen, direkt über den oder die Induktor(en) (3) beheizt. In Figur 4 ist dazu ein ringförmiger Induktor (3) außen um das Werkstück (2) und um die außenliegenden Bördelflansche (18) gelegt. In der Werkstücköffnung (15) ist ein zweiter Induktor (3) entlang der dortigen Umformbereiche (18) angeordnet. In der Ausführungsform von Figur 4 ist zumindest der äußere Induktor (3) mehrteilig ausgebildet. Er besteht aus drei Induktorteilen (4,5,6), die an geeigneten Stellen, z.B. an den Ecken über elastische Verbindungsteile (9,10) miteinander verbunden sind. Die Induktorteile (4,5,6) lassen sich über die Haltevorrichtungen (11) getrennt voneinander verstellen und an das Werkstück (2) anpassen.

Die Induktoren (3) können über, seitlich neben oder unter den Umformbereichen (18) angeordnet sein. Wie Figur 7 verdeutlicht, können auch zwei Induktoren (3) oder Induktorschleifen (16,17) parallel nebeneinander und zu beiden Seiten des Umformbereiches (18) angeordnet sein. Die Induktoren (3) sind dabei vorzugsweise derart positioniert, daß die Umformbereiche (18) und insbesondere die für eine spätere Falzung vorgesehenen Bördelflansche auf größerer Breite und nicht nur im späteren Biegebereich erwärmt werden.

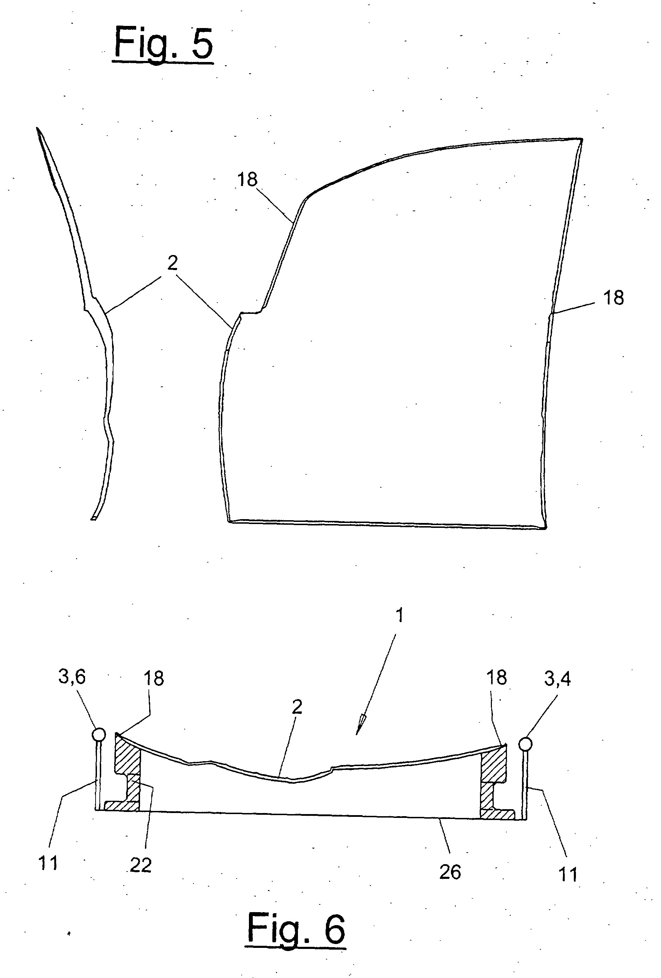

Im Ausführungsbeispiel von Figur 4 und 6 sind die Induktoren (3) starr und relativ ortsfest gegenüber dem Werkstück (2) angeordnet. Figur 7 zeigt hierzu eine Variante, bei der die Induktoren (3) mit einer schematisch angedeuteten Zustellvorrichtung (25) verbunden sind, die die Induktoren (3) auf und ab bewegt. Für die Induktorteile (4,5,6) können hierbei jeweils eigene und gemeinsam oder getrennt steuerbare Zustellvorrichtungen (25) vorhanden sein.

Der Umformbereich (18) ist als abgewinkelter Bördelflansch ausgebildet, der in der abgesenkten Betriebsstellung der Stellvorrichtung (25) mit seinem hochstehenden Rand zwischen die Induktoren (3) greift. Dieser hochstehende Rand des Bördelflansches wird dadurch beidseits erwärmt. Der anschließende und im wesentlichen horizontale Teil des Umformbereiches (18) wird nur von oben und vom linken Induktor (3) erwärmt. In der Ruhestellung ist die Zustellvorrichtung (25) mit den Induktoren (3) angehoben. Das Werkstück (2) liegt dadurch frei auf der Bauteilauflage (22) und kann für einem Bauteilwechsel entnommen und neu zugeführt werden.

Abwandlungen der Erfindung sind in verschiedener Weise möglich. In der gezeigten Ausführungsform erstrecken sich die Induktorteile (4,5,6,7,8) weitgehend parallel zu den benachbarten Konturen der Werkstücke (2) bzw. Umformbereiche (18). Sie können alternativ aber auch schief oder schräg dazu angeordnet sein. Durch die damit einhergehende Abstandsänderung wird der Wärmeeintrag verändert. Außerdem können die Induktorteile (4,5,6,7,8) zumindest teilweise in ihrer räumlichen Lage gegenüber dem Werkstück (2) verändert werden. In der gezeigten Ausführungsform bildet der mehrteilige Induktor (3) eine längs des Außenumfangs des Werkstücks (2) mit seitlichem Abstand umlaufende Schleife. Durch die erwähnte räumliche Veränderung ist es z.B. möglich, einzelne oder alle Induktorteile über oder unter dem betreffenden Werkstückrand zu positionieren. In der bevorzugten Ausführung wird das Werkstück randseitig erwärmt. Alternativ oder zusätzlich können in entsprechender Weise auch innenliegende Werkstückbereiche erwärmt werden.

In weiterer Abwandlung ist es möglich, mehrere Induktoren (3) einzusetzen oder mit den Induktorteilen (4,5,6,7,8) mehrere Induktorschleifen oder -windungen zu bilden. Diese können gleichen oder unterschiedlichen Werkstückbereichen zugeordnet sein.

### BEZUGSZEICHENLISTE

- 1: Heizeinrichtung, Gelieranlage
- 2: Werkstück, Fahrzeugtür
- 3: Induktor
- 4: Induktorteil
- 5: Induktorteil
- 6: Induktorteil
- 7: Induktorteil
- 8: Induktorteil
- 9: Verbindungselement, flexibel
- 10: Verbindungselement, starr
- 11: Haltevorrichtung
- 12: Stromversorgung, Steuerung
- 13: Elektroanschluß
- 14: Fluidanschluß
- 15: Öffnung, Fensteröffnung
- 16: Induktorwindung
- 17: Induktorwindung
- 18: Umformbereich, Bördelbereich
- 19: Außenblech
- 20: Innenblech
- 21: Dichtmittel
- 22: Bauteilaufnahme
- 23: Temperaturfühler
- 24 25: Zustellvorrichtung
- 26: Grundplatte, Gestell
- 27: Verstelleinrichtung

## Patentansprüche

1. Verfahren zur induktiven Wärmebehandlung von Werkstücken (2), insbesondere zum Gelieren oder zum Erwärmen von Bördelbereichen an Fahrzeugkarosserieteilen, wobei die Wärmebehandlung mit mindestens einem Induktor (3) durchgeführt wird, der aus mehreren hintereinander angeordneten sowie untereinander verbindbaren und elektrisch in Reihe mit einer gemeinsamen Stromversorgung (12) geschalteten Induktorteilen (4,5,6,7,8) besteht, **dadurch gekennzeichnet, dass** ein Wärmeeintrag an den erwärmten Bereichen des Werkstücks (2) örtlich verändert wird, wobei hierfür bereichsweise mehrere Induktorteile (4,5,6,7,8) nebeneinander zum Werkstück (2) angeordnet werden.

2. Verfahren zur induktiven Wärmebehandlung von Werkstücken (2), insbesondere zum Gelieren oder zum Erwärmen von Bördelbereichen an Fahrzeugkarosserieteilen, wobei die Wärmebehandlung mit mindestens einem Induktor (3) durchgeführt wird, der aus mehreren untereinander verbindbaren und elektrisch in Reihe mit einer gemeinsamen Stromversorgung (12) geschalteten Induktorteilen (4,5,6,7,8) besteht, **dadurch gekennzeichnet, dass** ein Wärmeeintrag an den erwärmten Bereichen des Werkstücks (2) örtlich verändert wird, wobei hierfür bereichsweise mindestens eines der Induktorteile (4,5,6,7,8) durch Verformung und/oder durch Positionierung auf örtlich unterschiedliche Lagen und/oder Abstände gegenüber dem Werkstück (2) eingestellt werden.

3. Verfahren nach Anspruch 1 oder 2, **dadurch gekennzeichnet, dass** bei der anordnung bzw. Einstellung des Induktors (3) zwischen benachbarten Induktorteilen (4,5,6,7,8) zunächst flexible Verbindungselemente (9) angeordnet werden, die anschließend gegen starre Verbindungselemente (10) ausgetauscht werden.

4. Verfahren nach Anspruch 1, 2 oder 3, **dadurch gekennzeichnet, dass** die Wärmebehandlung mit einem mittelfrequenten Wechselstrom von vorzugsweise 4 bis 15 kHz durchgeführt wird.

5. Heizeinrichtung zur induktiven Wärmebehandlung von Werkstücken (2), insbesondere zum Gelieren oder zum Erwärmen von Bördelbereichen an Fahrzeugkarosserieteilen, mit ein oder mehreren Induktoren (3), die aus mehreren hintereinander angeordneten sowie untereinander verbindbaren und elektrisch mit einer gemeinsamen Stromversorgung (12) in Reihe geschalteten Induktorteilen (4,5,6,7,8) bestehen, **dadurch gekennzeichnet, dass** die Induktorteile (4,5,6,7,8) zur örtlichen Veränderung eines Wärmeeintrags bereichsweise nebeneinander angeordnet sind.

6. Heizeinrichtung zur induktiven Wärmebehandlung von Werkstücken (2), insbesondere zum Gelieren oder zum Erwärmen von Bördelbereichen an Fahrzeugkarosserieteilen, mit ein oder mehreren Induktoren (3), die aus mehreren untereinander verbindbaren und elektrisch mit einer gemeinsamen Stromversorgung (12) in Reihe geschalteten Induktorteilen (4,5,6,7,8) bestehen, **dadurch gekennzeichnet, dass** die Induktorteile (4,5,6,7,8) zur örtlichen Veränderung eines Wärmeeintrags bereichsweise durch Verformung und/oder Positionierung auf örtlich unterschiedliche Lagen und/oder Abstände gegenüber dem Werkstück (2) einstellbar sind.

7. Heizeinrichtung nach Anspruch 5 oder 6, **dadurch gekennzeichnet, dass** die Induktorteile (4,5,6,7,8) nach Positionierung und Einstellung fixierbar sind.

8. Heizeinrichtung nach Anspruch 5, 6 oder 7, **dadurch gekennzeichnet, dass** zwischen benachbarten Induktorteilen (4,5,6,7,8) flexible und/oder starre Verbindungselemente (9,10) angeordnet sind.

9. Heizeinrichtung nach Anspruch 8, **dadurch gekennzeichnet, dass** die flexiblen Verbindungselemente (9) gegen die starren Verbindungselemente (10) austauschbar sind.

10. Heizeinrichtung nach einem der Ansprüche 5 bis 9, **dadurch gekennzeichnet, dass** die Induktorteile (4,5,6,7,8) einzeln einstellbare Haltevorrichtungen (11) aufweisen.

11. Heizeinrichtung nach Anspruch 10, **dadurch gekennzeichnet, dass** die Haltevorrichtungen (11) in zwei oder mehr Achsen verstellbar sind.

12. Heizeinrichtung nach einem der Ansprüche 8 bis 11, **dadurch gekennzeichnet, dass** die Induktorteile (4,5,6,7,8) und die Verbindungselemente (9,10) als stromleitende Rohre ausgebildet sind.

13. Heizeinrichtung nach einem der Ansprüche 5 bis 12, **dadurch gekennzeichnet, dass** der Induktor (3) einen Elektroanschluss (13) und einen Fluidanschluss (14) aufweist.

14. Heizeinrichtung nach einem der Ansprüche 5 bis 13, **dadurch gekennzeichnet, dass** die Heizeinrichtung (1) eine Stromversorgung (12) für einen mittelfrequenten Wechselstrom von vorzugsweise 4 bis 15 kHz aufweist.

15. Heizeinrichtung nach einem der Ansprüche 5 bis 14, **dadurch gekennzeichnet, dass** die Induktorteile (4,5,6,7,8) mit ihren Enden in enger Nachbarschaft so zueinander angeordnet sind, dass das Werkstück (2) weitgehend umschließbar ist.

16. Heizeinrichtung nach Anspruch 15, **dadurch gekennzeichnet, dass** die Induktorteile (4,5,6,7,8) eine größere Länge als die Verbindungselemente (9,10) aufweisen,

17. Heizeinrichtung nach einem der Ansprüche 5 bis 16, **dadurch gekennzeichnet, dass** die Induktorteile (4,5,6,7,8) eine kurze Länge haben und punktuell am Werkstück (2) positionierbar sind, wobei sie mit ihren Enden in größerem Abstand zueinander angeordnet sind, so dass die Verbindungselemente (9,10) in einem größeren Abstand vom Werkstück (2) als die Induktorteile (4,5,6,7,8) angeordnet sind.

18. Heizeinrichtung nach einem der Ansprüche 5 bis 17, **dadurch gekennzeichnet, dass** die Induktorteile (4,5,6,7,8) beweglich angeordnet und mit einer Zustellvorrichtung (25) verbunden sind.

## Claims

1. Method for inductive heat treatment of workpieces (2), in particular for gelation or for heating flanged areas on vehicle bodywork parts, with the heat treatment being carried out using at least one inductor (3) which comprises a number of inductor parts (4, 5, 6, 7, 8) which are arranged one behind the other, can be connected to one another and are electrically connected in series to a common power supply (12), **characterized in that** the location of the introduction of heat to the heated areas of the workpiece (2) is varied, with a number of inductor parts (4, 5, 6, 7, 8) being arranged in -areas alongside one another with respect to the workpiece (2) for this purpose.

2. Method for inductive heat treatment of workpieces (2), in particular for gelation or for heating flanged areas on vehicle bodywork parts, with the heat treatment being carried out using at least one inductor (3) which comprises a number of inductor parts (4, 5, 6, 7, 8) which can be connected to one another and are electrically connected in series to a common power supply (12), **characterized in that** the location of the introduction of heat to the heated areas of the workpiece (2) is varied, with at least one of the inductor parts (4, 5, 6, 7, 8) being set in physically different positions with respect to, and/or at different distances from, the workpiece (2) in places, for this purpose, by deformation and/or by positioning.

3. Method according to Claim 1 or 2, **characterized in that** flexible connecting elements (9) are initially arranged between adjacent inductor parts (4, 5, 6, 7, 8) for the arrangement or positioning of the inductor (3), and are then replaced by rigid connecting elements (10).

4. Method according to Claim 1, 2 or 3, **characterized in that** the heat treatment is carried out using a mid-frequency alternating current, preferably at 4 to 15 kHz.

5. Heating device for inductive heat treatments of workpieces (2), in particular for gelation or for heating of flanged areas on vehicle bodywork parts, having one or more inductors (3), which comprise a number of inductor parts (4, 5, 6, 7, 8) which are arranged one behind the other, can be connected to one another, and are electrically connected in series to a common power supply (12), **characterized in that** the inductor parts (4, 5, 6, 7, 8) are arranged alongside one another in places in order to vary the physical position of the introduction of heat.

6. Heating device for inductive heat treatment of workpieces (2), in particular for gelation or for heating flanged areas on vehicle bodywork parts, having one or more inductors (3), which comprise a number of inductor parts (4, 5, 6, 7, 8) which are arranged one behind the other, and are electrically connected in series to a common power supply (12), **characterized in that**, in order to vary the position of the introduction of heat, the inductor parts (4, 5, 6, 7, 8) can be set in physically different positions with respect to, and/or at distances from, the workpiece (2) in places, by deformation and/or positioning.

7. Heating device according to Claim 5 or 6, **characterized in that** the inductor parts (4, 5,- 6, 7, 8) can be fixed after positioning and adjustment.

8. Heating device according to Claim 5, 6 or 7, **characterized in that** flexible and/or rigid connecting elements (9, 10) are arranged between adjacent inductor parts (4, 5, 6, 7, 8).

9. Heating device according to Claim 8, **characterized in that** the flexible connecting elements (9) can be replaced by the rigid connecting elements (10) .

10. Heating device according to one of Claims 5 to 9, **characterized in that** the inductor parts (4, 5, 6, 7, 8) have individually adjustable holding apparatuses (11).

11. Heating device according to Claim 10, **characterized in that** the holding apparatuses (11) can be moved on two or more axes.

12. Heating device according to one of Claims 8 to 11, **characterized in that** the inductor parts (4, 5, 6, 7, 8) and the connecting elements (9, 10) are in the form of current-carrying tubes.

13. Heating device according to one of Claims 5 to 12, **characterized in that** the inductor (3) has an electrical connection (13) and a fluid connection (14).

14. Heating device according to one of Claims 5 to 13, **characterized in that** the heating device (1) has a power supply (12) for a mid-frequency alternating current, preferably at 4 to 15 kHz.

15. Heating device according to one of Claims 5 to 14, **characterized in that** the ends of the inductor parts (4, 5, 6, 7, 8) are arranged closely adjacent to one another such that the workpiece (2) can be largely surrounded.

16. Heating device according to Claim 15, **characterized in that** the inductor parts (4, 5, 6, 7, 8) are longer than the connecting elements (9, 10).

17. Heating device according to one of Claims 5 to 16, **characterized in that** the inductor parts (4, 5, 6, 7, 8) are short and can be positioned at a point on the workpiece (2), with their ends being arranged at a greater distance from one another, so that the connecting elements (9, 10) are arranged at a greater distance from the workpiece (2) than the inductor parts (4, 5, 6, 7, 8).

18. Heating device according to one of Claims 5 to 17, **characterized in that** the inductor parts (4, 5, 6, 7, 8) are arranged such that they can move, and are connected to a feed apparatus (25).

## Revendications

1. Procédé de traitement thermique par induction de pièces (2), notamment pour gélifier ou pour réchauffer des zones de rebord de parties de carrosserie de véhicules automobiles, le traitement thermique étant effectué par au moins un inducteur (3), constitué de plusieurs parties (4,5,6,7,8) d'inducteur disposées les unes derrière les autres ainsi que pouvant être reliées entre elles et montées électriquement en série avec une alimentation (12) commune en courant, **caractérisé en ce qu'**il consiste à modifier localement un apport de chaleur aux zones réchauffées de la pièce (2), plusieurs parties (4,5,6,7,8) d'inducteur étant à cet effet, zone par zone, juxtaposées à la pièce (2).

2. Procédé de traitement thermique par induction de pièces (2), notamment pour gélifier ou pour réchauffer des zones de rebord de parties de carrosserie de véhicules automobiles, le traitement thermique étant effectué par au moins un inducteur (3) qui est constitué de plusieurs parties (4,5,6,7,8) d'inducteur pouvant être reliées les unes aux autres et montées électriquement en série avec une alimentation (12) commune de courant,
**caractérisé en ce qu'**il consiste à modifier localement un apport de chaleur aux zones réchauffées de la pièce (2) en réglant pour cela, zone par zone, au moins l'une des parties (4,5,6,7,8) d'inducteur par déformation et/ou par mise en des positions et/ou à des distances différentes par rapport à la pièce (2).

3. Procédé suivant la revendication 1 ou 2, **caractérisé en ce que** dans la disposition ou dans le réglage de l'inducteur (3), il est disposé d'abord, entre des parties (4,5,6,7,8) d'inducteur voisines, des éléments (9) souples de liaison qui sont remplacés ensuite par des éléments (10) rigides de liaison.

4. Procédé suivant la revendication 1, 2 ou 3, **caractérisé en ce qu'**il consiste à effectuer le traitement thermique à l'aide d'un courant alternatif à moyenne fréquence, de préférence de 4 à 15 kHz.

5. Dispositif de chauffage pour le traitement thermique de pièces, (2) notamment pour gélifier ou pour réchauffer des zones de bord de parties de carrosserie de véhicules automobiles, comprenant un ou plusieurs inducteurs (3) qui sont constitués de plusieurs parties (4,5,6,7,8) d'inducteur disposées les unes derrière les autres ainsi que pouvant être reliées entre elles et montées électriquement en série avec une alimentation (12) commune de courant, **caractérisé en ce que** les parties (4,5,6,7,8) d'inducteur sont disposées en vue d'une modification locale d'un apport de chaleur les unes à côté des autres, zone par zone.

6. Dispositif de chauffage pour le traitement thermique de pièces (2) notamment pour gélifier ou pour réchauffer des zones de bord de parties de carrosserie de véhicules automobiles, comprenant un ou plusieurs inducteurs (3) qui sont constitués de plusieurs parties (4,5,6,7,8) d'inducteur disposées les unes derrière les autres ainsi que pouvant être reliées entre elles et montées électriquement en série avec une alimentation (12) commune de courant, **caractérisé en ce que** les parties (4,5,6,7,8) d'inducteur peuvent être réglées pour modifier localement un apport de chaleur zone par zone par déformation et/ou par mise en des positions localement différentes et/ou à des distances différentes vis-à-vis de la pièce (2).

7. Dispositif de chauffage suivant la revendication 5 ou 6, **caractérisé en ce que** les parties (4,5,6,7,8) d'inducteur peuvent être immobilisées après la mise en position et le réglage.

8. Dispositif de chauffage suivant la revendication 5, 6 ou 7, **caractérisé en ce qu'**il est prévu entre des parties (4,5,6,7,8) voisines d'inducteur des éléments (9,10) souples et/ou rigides de liaison.

9. Dispositif de chauffage suivant la revendication 8,
**caractérisé en ce que** les éléments (9) souples de liaison peuvent être remplacés par les éléments (10) rigides de liaison.

10. Dispositif de chauffage suivant l'une des revendications 5 à 9, **caractérisé en ce que** les parties (4,5,6,7,8) d'inducteur comportent des dispositifs (11) réglables de maintien.

11. Dispositif de chauffage suivant la revendication 10, **caractérisé en ce que** les dispositifs (11) de maintien peuvent être déplacés suivant deux axes ou suivant plusieurs axes.

12. Dispositif de chauffage suivant l'une des revendications 8 à 11, **caractérisé en ce que** les parties (4,5,6,7,8) d'inducteur et les éléments (9,10) de liaison sont constitués sous la forme de tubes conducteurs de l'électricité.

13. Dispositif de chauffage suivant l'une des revendications 5 à 12, **caractérisé en ce que** l'inducteur (3) comporte une borne (13) électrique et un raccord (14) de fluide.

14. Dispositif de chauffage suivant l'une des revendications 5 à 13, **caractérisé en ce que** le dispositif (1) de chauffage comporte une alimentation (12) en courant pour un courant alternatif en moyenne fréquence, de préférence de 4 à 15 kHz.

15. Dispositif de chauffage suivant l'une des revendications 5 à 14, **caractérisé en ce que** les parties (4,5,6,7,8) d'inducteur sont disposées en ayant leurs extrémités à proximité si étroite les unes des autres que la pièce (2) peut être dans une grande mesure entourée.

16. Dispositif de chauffage suivant la revendication 15, **caractérisé en ce que** les parties (4,5,6,7,8) d'inducteur ont une longueur plus grande que les éléments (9,10) de liaison.

17. Dispositif de chauffage suivant l'une des revendications 5 à 16, **caractérisé en ce que** les parties (4,5,6,7,8) d'inducteur ont une petite longueur et peuvent être placées ponctuellement sur la pièce (2) en étant disposées en ayant leurs extrémités à une distance plus grande les unes des autres, de sorte que les éléments (9,10) de liaison sont disposés à une distance plus grande de la pièce (2) que les parties (4,5,6,7,8) d'inducteur.

18. Dispositif de chauffage suivant l'une des revendications 5 à 17, **caractérisé en ce que** les parties (4,5,6,7,8) d'inducteur sont montées mobiles et sont reliées à un dispositif (25) d'avance.
